# FASCICULE DE BREVET EUROPEEN

(11) **EP 0 769 871 B1**
(45) Date de publication et mention de la délivrance du brevet: **10.05.2000**
(21) Numéro de dépôt: 96402134.9
(22) Date de dépôt: 08.10.1996
(51) Int. Cl.: H04N 5/33, H04N 5/91

(54) **Dispositif d'acquisition, de stockage et de restitution en temps réel d'un signal numérique**
Vorrichtung zur Aufnahme, Speicherung und Wiedergabe eines digitalen Signals
Device for acquisition, storage and real time reproducing of a digital signal

(30) Priorité: 19.10.1995 FR 9512283
(43) Date de publication de la demande: 23.04.1997
(73) Titulaire: AEROSPATIALE MATRA, 75781 Paris Cédex 16 (FR)
(72) Inventeur: Longuet, Bernard, 92290 Chatenay Malabry (FR); Alec, Jean-Marc, 78460 Chevreuse (FR)
(74) Mandataire: Bonnetat, Christian

(56) Documents cités:
- EP-A- 0 598 454
- EP-A- 0 649 121
- US-A- 4 318 137
- US-A- 5 051 835

## Description

La présente invention concerne un dispositif d'acquisition, de stockage et de restitution en temps réel d'un signal numérique.

Bien que non exclusivement, la présente invention est plus particulièrement appropriée à la validation d'algorithmes de traitement d'images d'un calculateur de traitement d'images, en particulier un calculateur destiné à équiper un porteur, par exemple un aéronef, pour traiter des images émises en temps réel, sous forme d'un signal numérique, par un imageur monté sur ledit porteur. Les résultats obtenus par ce traitement sont souvent utilisés pour la localisation et le guidage du porteur.

Le document EP-A-0 598 454 décrit un porteur équipé d'un calculateur pour traiter en temps réel des images multispectrales fournies par un imageur.

Pour valider un algorithme nouvellement conçu, c'est-à-dire pour vérifier son efficacité et sa précision en conditions opérationnelles, il est nécessaire, avant de l'utiliser en conditions réelles, de transmettre au calculateur muni dudit algorithme, dans des conditions proches des conditions réelles, notamment en temps réel, des signaux numériques du type de ceux que l'algorithme sera amené à traiter ultérieurement.

A cet effet, il est nécessaire de pouvoir stocker des signaux numériques émis par des capteurs, notamment des imageurs à rayonnement infrarouge ou visible, et de pouvoir restituer en temps réel audit calculateur de traitement d'images ces signaux stockés, simultanément avec des paramètres caractéristiques associés auxdits signaux (et notamment à des trames, lorsque les signaux stockés sont émis sous forme de trames) et destinés en particulier à préciser les conditions de détection.

On connaît des enregistreurs à têtes tournantes susceptibles d'être montés sur un aéronef et d'enregistrer en temps réel des signaux numériques émis par un capteur dudit aéronef.

Toutefois, ces enregistreurs à têtes tournantes ne sont pas adaptés à la validation d'algorithmes de traitement d'images, car :
- d'une part, bien que ces enregistreurs soient en mesure de restituer en temps réel des signaux stockés, la recherche de parties déterminées d'un signal stocké est longue et laborieuse et la mise en oeuvre de plusieurs restitutions successives, tel que nécessaire généralement pour la validation d'algorithmes, entraîne souvent la perte des signaux stockés dans le cas de nombreuses lectures ; et
- d'autre part, ces enregistreurs ne peuvent pas engendrer, simultanément au signal restitué, des paramètres caractéristiques associés audit signal et nécessaires à la validation des algorithmes.

La présente invention, telle que définie à la revendication 1, a pour objet de remédier à ces inconvénients. Elle concerne un dispositif permettant à tout instant d'acquérir, de stocker et de restituer en temps réel, de façon simple et efficace, un signal numérique émis par une source d'informations, notamment un capteur.

A cet effet, selon l'invention, ledit dispositif est remarquable en ce qu'il comporte :
- une unité de stockage rapide susceptible d'être montée :
   . d'une part, par l'intermédiaire d'une interface d'entrée, à la sortie d'une source d'informations, de manière à acquérir et à stocker en temps réel un signal numérique émis par ladite source d'informations ; et
   . d'autre part, par l'intermédiaire d'une interface de sortie, à l'entrée d'un dispositif utilisateur, de manière à restituer en temps réel audit dispositif utilisateur, au moins une partie du signal numérique stocké ; et
- au moins un moyen d'enregistrement auxiliaire permettant d'enregistrer des paramètres caractéristiques associés au signal numérique stocké, lesdits paramètres caractéristiques étant susceptibles d'être restitués audit dispositif utilisateur simultanément audit signal numérique stocké.

Ainsi, grâce à l'invention, ledit dispositif peut restituer en temps réel, à tout instant, à la fois un signal numérique stocké et des paramètres caractéristiques associés audit signal numérique et également stockés. Par conséquent, le dispositif conforme à l'invention est particulièrement bien approprié à la validation d'algorithmes de traitement de signaux.

De préférence, ladite unité de stockage rapide comporte un réseau de disques de stockage associés, tel que précisé ci-après. Un tel réseau présente l'avantage d'avoir une capacité et un débit de transfert de données élevés, ainsi qu'un coût réduit.

Selon l'invention, ladite source d'informations peut être constituée :
- soit d'un capteur directement relié au dispositif conforme à l'invention et transmettant à ce dernier en temps réel les mesures effectuées ;
- soit d'un enregistreur susceptible d'enregistrer en temps réel des mesures effectuées par un capteur et de les transmettre ultérieurement au dispositif conforme à l'invention.

Dans un premier mode de réalisation de l'invention, ledit moyen d'enregistrement auxiliaire est associé à un moyen d'émission, par exemple une base de temps, de manière à enregistrer directement, comme paramètres caractéristiques, des données émises par ledit moyen d'émission.

En outre, dans un second mode de réalisation, ledit moyen d'enregistrement auxiliaire comporte un clavier permettant à un opérateur d'enregistrer des paramètres caractéristiques associés à un signal numérique stocké.

Selon l'invention, lesdits paramètres caractéristiques concernent avantageusement au moins l'une des données suivantes relatives à la détection qui est effectuée par le capteur et qui est génératrice du signal numérique : la date et le lieu de la détection, les conditions météorologiques, le type de capteur utilisé.

Par ailleurs, de façon avantageuse, le dispositif conforme à l'invention peut comporter un moyen d'archivage permettant d'archiver les signaux numériques stockés.

Dans un premier mode de réalisation, ledit moyen d'archivage comporte une base de données, tandis que dans un second mode de réalisation, ledit moyen d'archivage est muni d'un support d'enregistrement magnétique.

En outre, le dispositif conforme à l'invention peut comporter avantageusement un moyen de visualisation permettant de visualiser au moins l'un des signaux numériques suivants :
- un signal numérique entrant, lors de son acquisition ;
- un signal numérique stocké ; et
- un signal numérique sortant, lors de sa restitution.

La présente invention est particulièrement bien appropriée à un signal numérique qui correspond à un signal vidéo représentant au moins une séquence d'images vidéo.

Dans ce cas, de façon avantageuse, chaque image vidéo est enregistrée sous forme d'une trame, comportant par exemple 640 colonnes et 480 lignes, dont une grande partie des lignes, par exemple 625 pour une trame de 640 lignes, contiennent des informations concernant les pixels de l'image, et dont au moins une partie des lignes restantes, dites lignes noires, comportent des informations relatives auxdits paramètres caractéristiques.

Les figures du dessin annexé feront bien comprendre comment l'invention peut être réalisée. Sur ces figures, des références identiques désignent des éléments semblables.

La figure 1 montre le schéma synoptique d'un dispositif conforme à l'invention.

Les figures 2A, 2B et 2C illustrent des phases successives de mise en oeuvre de l'invention à partir d'un second mode de réalisation.

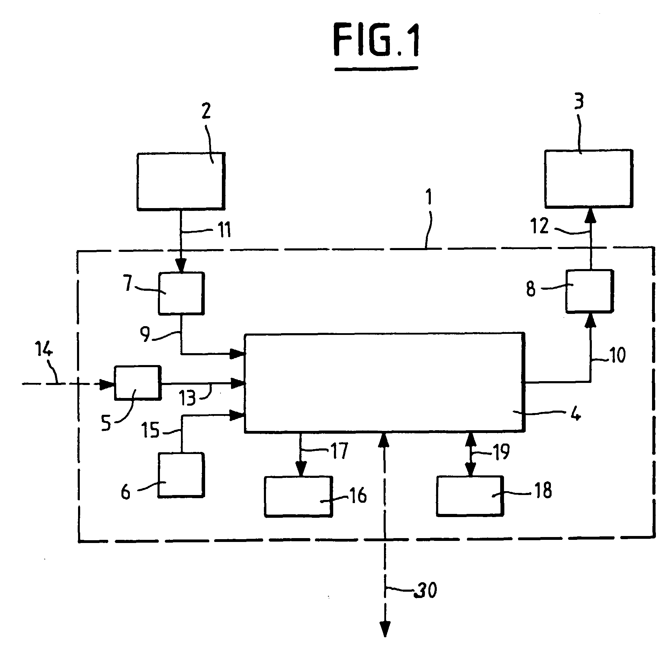

Le dispositif 1 conforme à l'invention et représenté schématiquement sur la figure 1 est destiné, d'une part, à acquérir et à stocker en temps réel des signaux numériques émis par une source d'informations 2 et, d'autre part, à restituer ces signaux numériques stockés, également en temps réel, à un dispositif utilisateur 3.

En ce qui concerne ladite source d'informations, il peut s'agir notamment d'un capteur 2, par exemple d'un imageur à rayonnement infrarouge ou visible, monté conjointement avec le dispositif 1 sur un porteur mobile non représenté, par exemple un aéronef, et destiné à former des images du paysage parcouru par ledit porteur et à transformer ces images en un signal numérique transmis au dispositif 1.

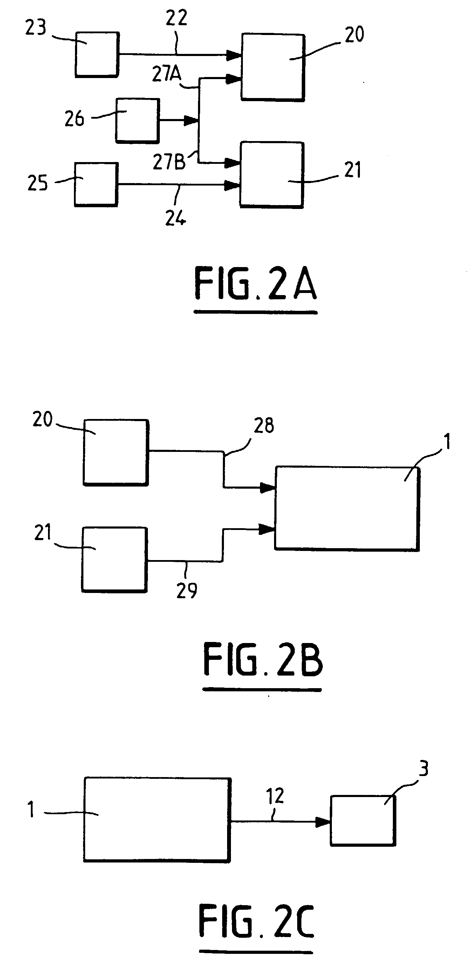

Bien entendu, dans le cadre de l'invention, la source d'informations peut être un autre type de dispositif, notamment un enregistreur 20 comme celui décrit ci-dessous en référence à un second mode de réalisation représenté sur la figure 2A. La présente invention peut en effet s'appliquer à toute source d'informations susceptible d'émettre un signal numérique.

En ce qui concerne ledit dispositif utilisateur 3, il peut s'agir de tout type de dispositif de traitement de signal numérique, et en particulier un calculateur de traitement d'images, comme précisé ci-dessous.

Afin de pouvoir acquérir, stocker et restituer en temps réel un signal numérique, ledit dispositif 1 comporte selon l'invention :
- une unité de stockage rapide 4, comportant par exemple un réseau de disques de stockage associés, de préférence du type RAID ("Redundant Area of Inexpensive Disks"), susceptible d'enregistrer un signal numérique ; et
- des moyens auxiliaires d'enregistrement 5 et 6 susceptibles d'enregistrer des paramètres caractéristiques associés au signal numérique enregistré.

L'utilisation d'un réseau de disques de stockage associés permet d'obtenir une unité de stockage de forte capacité (plusieurs giga octets), permettant des transferts d'informations rapides (jusqu'à 15 méga octets par seconde), et de faible coût. De façon connue, dans un tel réseau, plusieurs disques de stockage sont regroupés sur une seule interface de sorte que la capacité du réseau correspond au produit de la capacité d'un disque par le nombre de disques groupés.

Le dispositif 1 conforme à l'invention comporte en outre une interface d'entrée 7 et une interface de sortie 8 reliées respectivement par l'intermédiaire de liaisons 9 et 10 à l'unité de stockage 4.

Par l'intermédiaire de ladite interface d'entrée 7 pouvant être reliée au capteur 2 par une liaison 11, le dispositif 1 est susceptible d'acquérir un signal numérique émis par ledit capteur 2 et de le stocker, tandis que, par l'intermédiaire de l'interface de sortie 8 pouvant être reliée par une liaison 12 au dispositif utilisateur 3, le dispositif 1 est susceptible de restituer audit dispositif utilisateur 3 un signal numérique préalablement stocké.

Dans de nombreuses utilisations pratiques, notamment lors de la validation d'algorithmes d'un calculateur de traitement de signal, il est nécessaire d'émettre en plus du signal numérique stocké et restitué des paramètres caractéristiques associés audit signal.

Généralement, les paramètres caractéristiques nécessaires dans ces cas sont relatifs aux conditions dans lesquelles le capteur 2 a effectué les détections qui sont à l'origine du signal numérique enregistré. Il peut s'agir notamment de la date et du lieu de la détection, ainsi que des conditions météorologiques existantes.

Selon l'invention, ces paramètres caractéristiques peuvent être enregistrés conjointement avec le signal associé :
- d'une part, directement et automatiquement par le moyen d'enregistrement auxiliaire 5 relié par une liaison 13, à l'unité de stockage 4. Ce moyen 5 est particulièrement avantageux pour enregistrer des données objectives comme par exemple la date, en comportant à cet effet une base de temps intégré, ou en recevant les informations par un moyen d'émission externe (non représenté) par l'intermédiaire d'une liaison 14 ;
- d'autre part, de façon manuelle par le moyen d'enregistrement auxiliaire 6 qui est relié par une liaison 15 à l'unité de stockage 4 et qui peut être commandé par un opérateur à l'aide d'un clavier incorporé. Ainsi, l'opérateur peut entrer dans l'unité de stockage tous les paramètres nécessaires à un traitement ultérieur des signaux stockés.

Dans le cas où le signal numérique acquis et stocké est un signal vidéo représentant au moins une image vidéo, dont l'enregistrement est effectué sous forme d'une trame, selon l'invention, le signal représentatif de ladite image est entré dans une grande partie de lignes de la trame et les paramètres caractéristiques sont stockés dans au moins certaines des lignes restantes, dites lignes noires.

Selon l'invention, le dispositif 1 comporte de plus un moyen de visualisation 16 relié par une liaison 17 à l'unité de stockage 4, commandé par exemple par un opérateur du dispositif 1 par l'intermédiaire du moyen 6 et susceptible de visualiser, par exemple sur un écran :
- un signal entrant dans le dispositif 1 par l'interface d'entrée 7 lors d'une acquisition de signal, et/ou
- un signal stocké, et/ou
- un signal sortant du dispositif 1 par l'interface de sortie 8 lors d'une restitution de signal.

Le dispositif 1 conforme à l'invention comporte par ailleurs un moyen d'archivage 18 relié par une liaison 19 à l'unité de stockage 4 et permettant d'enregistrer sur un support spécifique, par exemple un support magnétique, des signaux numériques et des paramètres caractéristiques associés qui sont stockés dans l'unité de stockage 4. Bien entendu, ledit moyen d'archivage 18 est susceptible également de transmettre à l'unité de stockage 4 des informations préenregistrées sur un support d'enregistrement, l'unité de stockage 4 pouvant transmettre ultérieurement ces informations au dispositif utilisateur 3. Ainsi, la transmission d'informations d'un dispositif conforme à l'invention à un dispositif identique peut être effectuée par un simple transfert du support d'enregistrement utilisé, d'un dispositif à l'autre.

Selon l'invention, l'archivage des informations stockées dans l'unité de stockage 4 peut également être effectué par l'intermédiaire d'une base de données non représentée et reliée à l'unité de stockage 2 par une liaison 30.

Dans un second mode de réalisation particulièrement avantageux de l'invention, la mise en oeuvre des opérations de stockage et de restitution est réalisée en trois phases successives illustrées respectivement sur les figures 2A, 2B et 2C.

La première desdites phases, relative à la figure 2A, est mise en oeuvre lors de la mission réalisée par le porteur, par exemple un vol d'essai pour un aéronef, et les deux autres phases sont mises en oeuvre au retour du porteur sur un site de traitement d'informations.

Dans ce mode de réalisation, utilisant un aéronef non représenté, le dispositif 1 conforme à l'invention n'est pas monté sur l'aéronef, mais il reste au sol. En revanche, on monte sur l'aéronef :
- une source d'informations constituée d'un enregistreur 20, par exemple un enregistreur à têtes tournantes, qui enregistre des signaux numériques reçus par l'intermédiaire d'une liaison 22 d'un capteur 23, par exemple un imageur qui observe le territoire survolé par l'aéronef ; et
- un moyen d'enregistrement auxiliaire 21 qui enregistre, quant à lui, des informations concernant notamment l'aéronef ou le capteur 23 et reçues par l'intermédiaire d'une liaison 24 d'un moyen d'émission 25. Les informations ainsi enregistrées par le moyen d'enregistrement auxiliaire 21, comme par exemple la vitesse de l'aéronef, seront utilisées comme paramètres caractéristiques associés aux informations enregistrées par l'enregistreur 20.

Afin de pouvoir dater les diverses informations enregistrées par l'enregistreur 20 et le moyen d'enregistrement auxiliaire 21, on prévoit une base de temps 26 qui transmet la date respectivement par l'intermédiaire de liaisons 27A et 27B aux éléments précédents.

Lors du retour au sol de l'aéronef, à la fin de la mission, on relie l'enregistreur 20 et le moyen d'enregistrement auxiliaire 21 au dispositif 1 respectivement par l'intermédiaire de liaisons 28 et 29, afin de transmettre audit dispositif 1 au moins une partie des informations enregistrées.

Le dispositif 1 reçoit ainsi, en temps réel, pour leur stockage :
- de l'enregistreur 20, des signaux numériques émis par exemple sous forme d'un signal vidéo représentant des séquences d'images vidéo ; et
- du moyen d'enregistrement auxiliaire 21, des paramètres caractéristiques associés aux signaux numériques reçus de l'enregistreur 20.

Ultérieurement, dans une troisième phase, le dispositif 1 peut restituer au dispositif utilisateur 3, en temps réel, les diverses informations ainsi stockées, tel que représenté sur la figure 2C. A cet effet, la liaison 12 utilisée pour cette restitution peut être une liaison double de manière à séparer la transmission des signaux numériques, de celle des paramètres caractéristiques.

## Revendications

1. Dispositif d'acquisition, de stockage et de restitution en temps réel d'un signal numérique,
caractérisé :
- en ce qu'il comporte:
. une unité de stockage rapide (4) qui comprend plusieurs disques de stockage présentant une vitesse de transfert de données jusqu'à 15 méga-octets par seconde et regroupés en une seule interface et qui est susceptible d'être montée, d'une part, par l'intermédiaire d'une interface d'entrée (7), à la sortie d'une source d'informations (2, 20), de manière à acquérir et à stocker en temps réel un signal numérique émis par ladite source d'informations (2, 20) et, d'autre part, par l'intermédiaire d'une interface de sortie (8), à l'entrée d'un dispositif utilisateur (3), de manière à pouvoir restituer telle quelle en temps réel, à tout instant, audit dispositif utilisateur (3), au moins une partie dudit signal numérique préalablement stocké ; et
. au moins un moyen d'enregistrement (5, 6) qui est auxiliaire et qui permet d'enregistrer des paramètres caractéristiques associés audit signal numérique stocké ; et
- en ce qu'il est formé de manière à restituer tels quels audit dispositif utilisateur (3), simultanément à la restitution d'une partie du signal numérique, les paramètres caractéristiques associés à ladite partie du signal numérique.

2. Dispositif selon la revendication 1, appliqué à un aéronef qui comporte ladite source d'informations (20) constituée d'un enregistreur et destinée à détecter en vol un signal numérique devant être transmis à l'unité de stockage (4),
caractérisé en ce que un moyen d'enregistrement (21) étant monté sur ledit aéronef de manière à enregistrer en vol des paramètres caractéristiques relatifs aux conditions dans lesquelles la source d'informations (20) détecte ledit signal numérique, tout ledit dispositif excepté ledit moyen d'enregistrement auxiliaire (21), est installé au sol et est formé de manière à recevoir, au retour au sol de l'aéronef, en temps réel ledit signal numérique enregistré par la source d'informations (20), ainsi que lesdits paramètres caractéristiques enregistrés par le moyen d'enregistrement auxiliaire (21).

3. Dispositif selon l'une des revendications précédentes,
caractérisé en ce que ledit moyen d'enregistrement auxiliaire (5) est associé à un moyen d'émission de manière à enregistrer directement et automatiquement, comme paramètres caractéristiques, des données émises par ledit moyen d'émission.

4. Dispositif selon l'une des revendications 1 ou 2,
caractérisé en ce que ledit moyen d'enregistrement auxiliaire (6) comporte un clavier permettant à un opérateur d'enregistrer des paramètres caractéristiques associés à un signal numérique stocké.

5. Dispositif selon l'une des revendications 1 à 4,
caractérisé en ce que lesdits paramètres caractéristiques concernent au moins l'une des données suivantes relatives à la détection qui est génératrice du signal numérique : la date et le lieu de la détection, les conditions météorologiques, le type de capteur utilisé.

6. Dispositif selon l'une quelconque des revendications précédentes,
caractérisé en ce qu'il comporte un moyen d'archivage (18) permettant d'archiver les signaux numériques stockés.

7. Dispositif selon la revendication 6,
caractérisé en ce que ledit moyen d'archivage comporte une base de données.

8. Dispositif selon la revendication 6,
caractérisé en ce que ledit moyen d'archivage (18) est muni d'un support d'enregistrement magnétique.

9. Dispositif selon l'une quelconque des revendications précédentes,
caractérisé en ce qu'il comporte un moyen de visualisation (16) permettant de visualiser au moins l'un des signaux numériques suivants :
- un signal numérique entrant, lors de son acquisition ;
- un signal numérique stocké ; et
- un signal numérique sortant, lors de sa restitution.

10. Dispositif selon l'une quelconque des revendications précédentes,
caractérisé en ce que ledit signal numérique est un signal vidéo représentant au moins une séquence d'images vidéo.

11. Dispositif selon la revendication 10,
caractérisé en ce que chaque image vidéo est enregistrée sous forme d'une trame, dont une grande partie des lignes contiennent des informations concernant les pixels de l'image, et dont au moins une partie des lignes restantes comportent des informations relatives auxdits paramètres caractéristiques.

## Patentansprüche

1. Vorrichtung zu Aufnahme, Speicherung und Wiedergabe eines digitalen Signals in Echtzeit,
dadurch gekennzeichnet,
- daß es folgendes umfaßt:
• eine Schnellspeichereinheit (4), die aus mehreren, in einer Schnittstelle zusammengefaßten Speicherplatten mit einer Datenübertragungsgeschwindigkeit von bis zu 15 Megabyte pro Sekunde besteht und die einerseits über eine Eingangsschnittstelle (7) am Ausgang einer Informationsquelle (2, 20) so angebracht werden kann, daß ein von der genannten Informationsquelle (2, 20) ausgesandtes digitales Signal aufgenommen und in Echtzeit gespeichert werden kann, und andererseits über eine Ausgangsschnittstelle (8) am Eingang einer Nutzungsvorrichtung (3) so montiert werden kann, daß der genannten Nutzungsvorrichtung (3) jederzeit so wie er ist, zumindest ein Teil des genannten, vorher gespeicherten digitalen Signals wiedergegeben werden kann; und
• mindestens ein Aufzeichnungsmittel (5, 6), das zusätzlich vorhanden ist und die Aufzeichnung von dem genannten gespeicherten digitalen Signal zugeordneten charakteristischen Parametern gestattet; und
- daß sie so ausgebildet ist, daß sie die dem genannten, gespeicherten digitalen Signal zugeordneten charakteristischen Parameter, so wie sie sind, der Nutzungsvorrichtung (3) gleichzeitig mit der Wiedergabe eines Teils des digitalen Signals wiedergibt.

2. Vorrichtung gemäß Anspruch 1, angewandt auf ein Flugzeug, das die genannte, aus einer Aufzeichnungsvorrichtung bestehende Informationsquelle (20) zur Erfassung eines digitalen Signals während des Flugs umfaßt, das zur Speichereinheit (4) übertragen werden muß,
dadurch gekennzeichnet, daß ein Aufzeichnungsmittel (21), das so auf das genannte Flugzeug montiert ist, daß es während des Flugs charakteristische Parameter bezüglich der Bedingungen aufzeichnet, unter denen die Informationsquelle (20) das genannte digitale Signal erfaßt, die gesamte Vorrichtung (mit Ausnahme des genannten Aufzeichnungshilfsmittels (21)) am Boden installiert und so ausgebildet ist, daß sie bei Rückkehr des Flugzeugs zum Boden in Echtzeit das genannte, von der Informationsquelle (20) aufgezeichnete digitale Signal sowie die vom Aufzeichnungshilfsmittel (21) aufgezeichneten genannten charakteristischen Parameter empfängt.

3. Vorrichtung gemäß einem der vorstehenden Ansprüche, dadurch gekennzeichnet, daß das genannte Aufzeichnungshilfsmittel (5) einem Sendemittel zugeordnet ist, so daß es direkt und automatisch von dem genannten Sendemittel ausgegebene Daten als charakteristische Parameter aufzeichnet.

4. Vorrichtung gemäß einem der Ansprüche 1 oder 2,
dadurch gekennzeichnet, daß das genannte Aufzeichnungshilfsmittel (6) eine Tastatur umfaßt, die es dem Bediener ermöglicht, einem gespeicherten digitalen Signal zugeordnete charakteristische Parameter aufzuzeichnen.

5. Vorrichtung gemäß einem der Ansprüche 1 bis 4,
dadurch gekennzeichnet, daß die genannten charakteristischen Parameter zumindest eine der genannten folgenden Angaben zur Erfassung, durch die das digitale Signal gebildet wird, betreffen: Datum oder Ort der Erfassung, Witterungsbedingungen, Art des verwendeten Meßfühlers.

6. Vorrichtung gemäß einem beliebigen der vorstehenden Ansprüche,
dadurch gekennzeichnet, daß sie ein Archivierungsmittel (18) umfaßt, das die Archivierung der gespeicherten digitalen Signale ermöglicht.

7. Vorrichtung gemäß Anspruch 6,
dadurch gekennzeichnet, daß das genannte Archivierungsmittel eine Datenbank umfaßt.

8. Vorrichtung gemäß Anspruch 6,
dadurch gekennzeichnet, daß das genannte Archivierungsmittel (18) mit einem Magnetaufzeichnungsträger ausgestattet ist.

9. Vorrichtung gemäß einem beliebigen der vorstehenden Ansprüche,
dadurch gekennzeichnet, daß sie ein Anzeigemittel (16) umfaßt, das es ermöglicht, mindestens eines der folgenden digitalen Signale anzuzeigen:
- ein eingehendes digitales Signal bei seiner Aufnahme;
- ein gespeichertes digitales Signal; und
- ein herausgehendes digitales Signal bei seiner Wiedergabe.

10. Vorrichtung gemäß einem beliebigen der vorstehenden Ansprüche,
dadurch gekennzeichnet, daß das genannte digitale Signal ein Videosignal ist, das mindestens eine Folge von Videobildern darstellt.

11. Vorrichtung gemäß Anspruch 10,
dadurch gekennzeichnet, daß jedes Videobild in Form eines Teilbilds aufgezeichnet wird, von dem ein Großteil Zeilen Informationen zu den Bildpixeln enthält und von dem mindestens ein Teil der restlichen Zeilen Informationen zu den genannten charakteristischen Parametern enthält.

## Claims

1. Device for acquiring, storing and reproducing in real time a digital signal,
characterized:
- in that it comprises:
. a fast storage unit (4) which comprises several storage disks exhibiting a data transfer speed of up to 15 megabytes per second and grouped together into a single interface and which is capable of being mounted, on the one hand, by way of an input interface (7), at the output of an information source (2, 20), in such a way as to acquire and to store in real time a digital signal emitted by the said information source (2, 20) and, on the other hand, by way of an output interface (8), at the input of a user device (3), in such a way as to be able to reproduce as is in real time, at any instant, at the said user device (3), at least a part of the said digital signal previously stored; and
. at least one recording means (5, 6) which is auxiliary and which makes it possible to record characteristic parameters associated with the said stored digital signal;
- in that it is formed in such a way as to reproduce as is at the said user device (3), simultaneously with the reproduction of a part of the digital signal, the characteristic parameters associated with the said part of the digital signal.

2. Device according to Claim 1, applied to an aircraft which includes the said information source (20) consisting of a recorder and intended for detecting in flight a digital signal requiring to be transmitted to the storage unit (4),
characterized in that a recording means (21) being mounted on the said aircraft in such a way as to record in flight characteristic parameters pertaining to the conditions under which the information source (20) detects the said digital signal, all the said device, except for the said auxiliary recording means (21), is installed on the ground and is formed in such a way as to receive, on the return of the aircraft to the ground, in real time the said digital signal recorded by the information source (20), as well as the said characteristic parameters recorded by the auxiliary recording means (21).

3. Device according to one of the preceding claims,
characterized in that the said auxiliary recording means (5) is associated with a means of emission in such a way as to directly and automatically record, as characteristic parameters, data emitted by the said means of emission.

4. Device according to one of Claims 1 or 2,
characterized in that the said auxiliary recording means (6) includes a keyboard allowing an operator to record characteristic parameters associated with a stored digital signal.

5. Device according to one of Claims 1 to 4,
characterized in that the said characteristic parameters relate to at least one of the following items of data pertaining to the detection which gives rise to the digital signal: the date and place of detection, the weather conditions, the type of sensor used.

6. Device according to any one of the preceding claims,
characterized in that it includes an archiving means (18) making it possible to archive the stored digital signals.

7. Device according to Claim 6,
characterized in that the said archiving means includes a database.

8. Device according to Claim 6,
characterized in that the said archiving means (18) is furnished with a magnetic recording medium.

9. Device according to any one of the preceding claims,
characterized in that it includes a display means (16) making it possible to display at least one of the following digital signals:
- an incoming digital signal, during acquisition thereof;
- a stored digital signal; and
- an outgoing digital signal, during reproduction thereof.

10. Device according to any one of the preceding claims,
characterized in that the said digital signal is a video signal representing at least one sequence of video images.

11. Device according to Claim 10,
characterized in that each video image is recorded in the form of a frame, a large part of the lines of which contain information relating to the pixels of the image, and of which at least a part of the remaining lines include information pertaining to the said characteristic parameters.
